# EUROPÄISCHE PATENTANMELDUNG

(11) **EP 0 853 225 A2**
(43) Veröffentlichungstag der Anmeldung: **15.07.1998**
(21) Anmeldenummer: 98890001.5
(22) Anmeldetag: 02.01.1998
(51) Int. Cl.: F28D 9/00, F16H 57/02

(54) **Kühler für das Öl im Gehäuse eines Getriebes**

(30) Priorität: 10.01.1997 AT 27/97
(71) Anmelder: KTM-Kühler GmbH, 5230 Mattighofen (AT)
(72) Erfinder: Bachinger, Harald, Ing., 4400 Steyr (AT)
(74) Vertreter: Hübscher, Heiner, Dipl.-Ing.

(57) **Zusammenfassung**

Es wird ein Kühler für das Öl im Gehäuse (2) eines Getriebes beschrieben. Dieser Kühler besteht aus einem Wärmetauscher mit einem eine vorzugsweise profilierte Wärmetauscherplatte zwischen dem Kühlmittel und dem zu kühlenden Öl aufweisenden Gehäuse (1) und mit wenigstens einem durch die Wärmetauscherplatte begrenzten, an einen Zu- und einen Ablauf (6, 7) angeschlossenen Strömungskanal (5) für das Kühlmittel. Um vorteilhafte Konstruktionsverhältnisse zu schaffen, wird vorgeschlagen, daß das Gehäuse (1) des Wärmetauschers als Deckel in eine Öffnung (10) des Getriebegehäuses (2) einsetzbar ist und daß die dem Inneren des Getriebegehäuses (2) zugekehrte Wand des Wärmetauschergehäuses (1) die Wärmetauscherplatte bildet.

## Beschreibung

Die Erfindung bezieht sich auf einen Kühler für das Öl im Gehäuse eines Getriebes, bestehend aus einem Wärmetauscher mit einem eine vorzugsweise profilierte Wärmetauscherplatte zwischen dem Kühlmittel und dem zu kühlenden Öl aufweisenden Gehäuse und mit wenigstens einem durch die Wärmetauscherplatte begrenzten, an einen Zu- und einen Ablauf angeschlossenen Strömungskanal für das Kühlmittel.

Bekannte Ölkühler (US 4 708 199 A) bestehen aus ineinandergesteckten und flüssigkeitsdicht miteinander verbundenen Wärmetauscherplatten, zwischen denen sich abwechselnd Strömungskanäle für das zu kühlende Öl und das Kühlmittel, im allgemeinen Wasser, ergeben. Diese beiden Medien werden aus der einen durch je eine Wärmetauscherplatte gebildeten Strömungswanne durch die unmittelbar anschließende hindurch in die jeweils übernächste Strömungswanne geleitet, und zwar über tiefgezogene Ansätze der Wärmetauscherplatten. Diese vergleichsweise einfach aus untereinander gleichen Wärmetauscherplatten aufgebauten Plattenwämetauscher stellen jedoch gesonderte Baueinheiten dar, die im Falle ihres Einsatzes zur Kühlung von Getriebeöl nicht nur an einen Kühlmittelkreislauf, sondern auch an einen das Getreibegehäuse einschließenden Kreislauf für das Getriebeöl angeschlossen werden müssen. Neben diesem Konstruktionsaufwand ist außerdem das mit einem solchen Aufwand verbundene zusätzliche Gewicht zu berücksichtigen, das insbesondere beim Einsatz dieser Ölkühler für die Schalt- oder Verteilergetriebe von Kraftfahrzeugen eine Rolle spielt.

Der Erfindung liegt somit die Aufgabe zugrunde, einen Kühler für das Öl im Gehäuse eines Getriebes der eingangs geschilderten Art so auszugestalten, daß ein sehr einfacher, gewichtssparender Aufbau sichergestellt werden kann.

Die Erfindung löst die gestellte Aufgabe dadurch, daß das Gehäuse des Wärmetauschers als Deckel in eine Öffnung des Getriebegehäuses einsetzbar ist und daß die dem Inneren des Getriebegehäuses zugekehrte Wand des Wärmetauschergehäuses die Wärmetauscherplatte bildet.

Durch diese Maßnahme erübrigt sich zunächst eine vom Getriebegehäuse gesonderte Baueinheit für den Kühler, weil ja der Wärmetauscher einen Deckel für das Getriebegehäuse bildet. Wegen der Ausbildung der einen Außenwand des Wärmetauschergehäuses als Wärmetauscherplatte erfordert der Wärmetauscher darüber hinaus nur einen vergleichsweise geringen Konstruktionsaufwand, zumal die Notwendigkeit eines äußeren Kreislaufes für das Getriebeöl entfällt. Dem von den Zahnrädern des Getriebes abgeschleuderten und auf die Wärmetauscherplatte gespritzten Getriebeöl wird über das Kühlmittel Wärme entzogen, so daß es von der Wärmetauscherplatte gekühlt abtropfen kann, beispielsweise in die Ölwanne des Getriebegehäuses. Da das Gehäuse des Wärmetauschers einerseits einen Teil der Wandung des Getriebegehäuses darstellt und anderseits keinen Strömungskanal für das zu kühlende Getriebeöl erfordert- die Wärmetauscherplatte dient ja im wesentlichen als Auffangwand für das von den Zahnrädern abspritzende Getriebeöl -, bleibt die Gewichtsbelastung durch einen solchen Kühler beschränkt. In diesem Zusammenhang ist außerdem der Fortfall eines äußeren Getriebeölkreislaufes zu berücksichtigen.

Besonders einfache Konstruktionsverhältnisse ergeben sich, wenn der Wärmetauscher aus zwei zwischen sich wenigstens einen Srömungskanal für das Kühlmittel einschließenden, profilierten Schalen besteht, von denen die dem Inneren des Getriebegehäuses zugekehrte, die Wärmetauscherplatte bildende Schale gegenüber dem Getriebegehäuse abgedichtet ist. Die profilierten Schalen können vergleichsweise einfach durch ein Tiefziehen hergestellt werden, wobei durch die Abdichtung der dem Inneren des Getriebegehäuses zugekehrten Schale gegenüber dem Getriebegehäuse sichergestellt wird, daß selbst im Falle einer undichten Verbindung der beiden Gehäuseschalen des Wärmetauschers kein Kühlmittel in das Getriebegehäuse eindringen und sich mit dem Getriebeöl vermischen kann.

Damit eine entsprechende Menge an Getriebeöl auf die dem Inneren des Getriebegehäuses zugekehrte Wand des Wärmetauschers auch bei einer bezüglich des abspritzenden Getriebeöls weniger günstigen Lage dieser Wand gelangen kann, kann wenigstens ein in das Inneren des Getriebegehäuses ragendes Leitblech vorgesehen sein, das einen Teil des von den Zahnrädern des Getriebes abspritzenden Getriebeöls zur Wärmetauscherplatte umleitet.

In der Zeichnung ist der Erfindungsgegenstand beispielsweise dargestellt. Es zeigen
- Fig. 1: einen erfindungsgemäßen Kühler für das Öl im Gehäuse eines Getriebes in einem vereinfachten Axailschnitt,
- Fig. 2: diesen Kühler in einer Seitenansicht in einem kleineren Maßstab und
- Fig. 3: den Kühler entsprechend der Fig. 2 in einer Draufsicht.

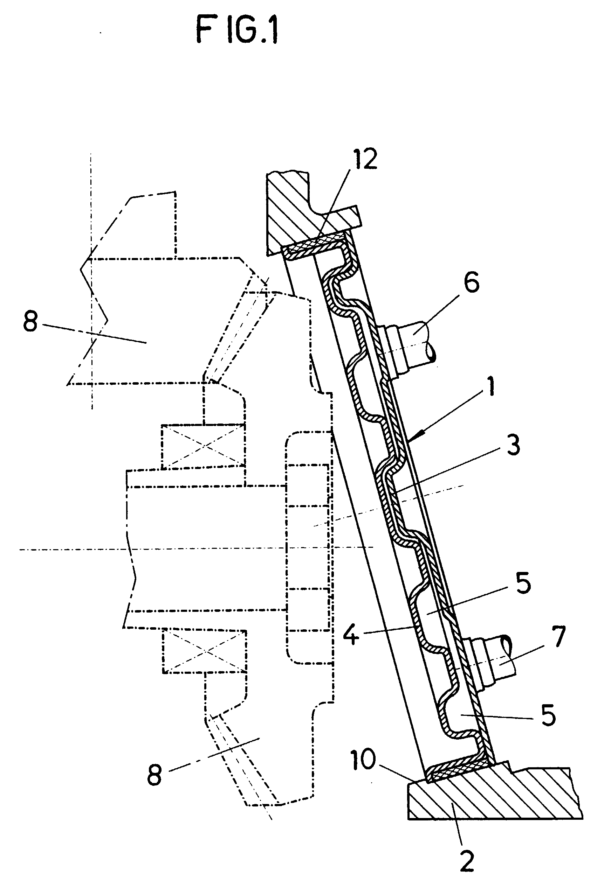

Der Kühler gemäß dem dargestellten Ausführungsbeispiel besteht im wesentlichen aus einem Wärmetauscher, dessen Gehäuse 1 als Deckel in ein Getriebegehäuse 2 eingesetzt wird, wie dies in der Fig. 1 angedeutet ist. Das Gehäuse 1 des Wärmetauschers ist aus zwei Schalen 3 und 4 zusammengesetzt, die durch einen Tiefziehvorgang hergestellt und so profiliert wurden, daß sich zwischen den zusammengefügten Schalen 3 und 4 ringförmige Strömungskanäle 5 für ein Kühlmittel, im allgemeinen Wasser, ergeben. Diese ringförmigen Strömungskanäle 5 stehen mit einem Zulauf 6 und einem Ablauf 7 für das Kühlmittel in Verbindung. Wird ein solcher Kühler bei einem Schalt- oder Verteilergetriebe eines Kraftfahrzeuges eingesetzt, so kann der Wärmetauscher über den Zu- und Ablauf 6, 7 vorteilhaft an den Kühlkreislauf für den Verbrennungsmotor angeschlossen werden.

Da das Gehäuse 1 des Wärmetauschers als Deckel in ein Getriebegehäuse 2 eingesetzt ist, bildet die dem Inneren des Getriebegehäuses 2 zugekehrte, aus der Schale 4 bestehende Wand des Wärmetauschergehäuses 1 eine Wärmetauscherplatte, die vom fliehkraftbedingt von den Zahnrädern 8 abgeschleuderten Getriebeöl benetzt wird, so daß ein Teil der fühlbaren Wärme des Getriebeöls über diese Wärmetauscherplatte auf das Kühlmittel übertragen und von diesem abgeführt wird. Die Profilierung der Schalen 3 und 4 bringt nicht nur eine höhere Steifigkeit des Wärmetauschergehäuses 1 mit sich, sondern sorgt auch für eine entsprechend große Wärmetauscherfläche.

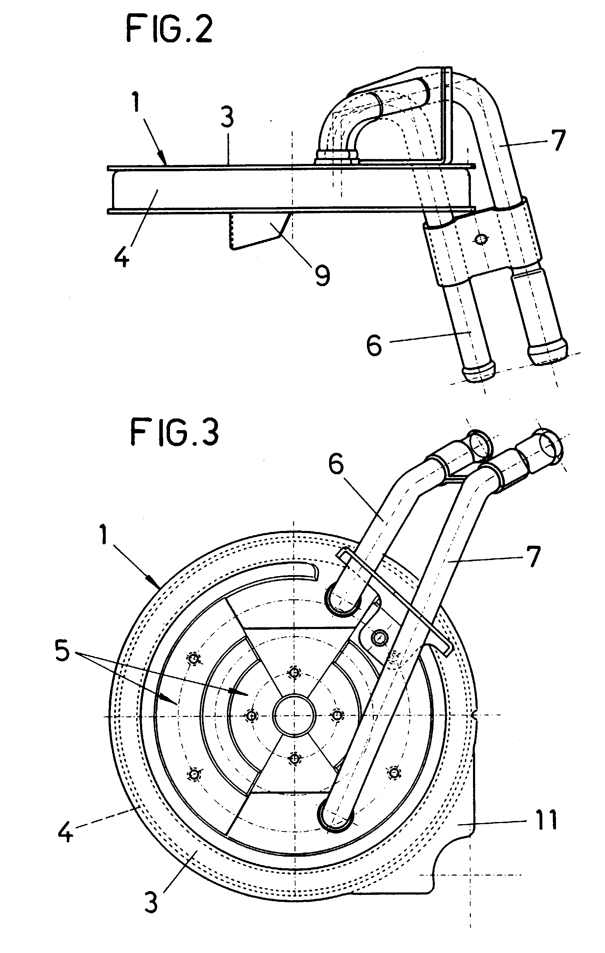

Um die Außenseite der Schale 4 mit einer für eine gute Kühlung ausreichenden Ölmenge benetzen zu können, kann die Schale 4 mit wenigstens einem Leitblech 9 (Fig. 2) versehen sein, das gegen das Innere des Getriebegehäuses 2 vorragt und das von den Zahnrädern 8 abgeschleuderte Getrtiebeöl zur Schale 4 des Wärmetauschergehäuses 1 weiterleitet. Das gekühlte Getriebeöl tropft dann wieder von der Schale 4 in das Getriebegehäuse 2 ab.

Wie der Fig. 3 entnommen werden kann, weist das Gehäuse 1 des Wärmetauschers eine kreisförmige Umrißform auf, was zwar nicht funktionswesentlich ist, doch einfachere Herstellungs- und Dichtungsverhältnisse schafft. Um die richtige Einbaulage in der Öffnung 10 des Getriebegehäuses 2 sicherzustellen, kann das Wärmetauschergehäuse 1 einen einseitigen Montageansatz 11 bilden, der die Einbaulage in der entsprechend ausgenommenen Öffnung 10 des Getriebegehäuses 2 bestimmt. Zur Abdichtung des durch das Gehäuse 1 gebildeten Deckels in der Öffnung 10 des Getreibegehäuses 2 dient eine umlaufende Dichtung 12, die vorzugsweise zwischen der dem Inneren des Getriebegehäuses 2 zugekehrten Schale 4 und dem Getriebegehäuse 2 angeordnet wird, um ein Eindringen von Kühlmittel in das Getriebegahäuse 2 auch in einem Leckfalle zu vermeiden.

## Patentansprüche

1. Kühler für das Öl im Gehäuse (2) eines Getriebes, bestehend aus einem Wärmetauscher mit einem eine vorzugsweise profilierte Wärmetauscherplatte zwischen dem Kühlmittel und dem zu kühlenden Öl aufweisenden Gehäuse (1) und mit wenigstens einem durch die Wärmetauscherplatte begrenzten, an einen Zu- und einen Ablauf (6, 7) angeschlossenen Strömungskanal (5) für das Kühlmittel, dadurch gekennzeichnet, daß das Gehäuse (1) des Wärmetauschers als Deckel in eine Öffnung (10) des Getriebegehäuses (2) einsetzbar ist und daß die dem Inneren des Getriebegehäuses (2) zugekehrte Wand des Wärmetauschergehäuses (1) die Wärmetauscherplatte bildet.

2. Kühler nach Anspruch 1, dadurch gekennzeichnet, daß der Wärmetauscher aus zwei zwischen sich wenigstens einen Srömungskanal (5) für das Kühlmittel einschließenden, profilierten Schalen (3, 4) besteht, von denen die dem Inneren des Getriebegehäuses (2) zugekehrte, die Wärmetauscherplatte bildende Schale (4) gegenüber dem Getriebegehäuse (2) abgedichtet ist.

3. Kühler nach Anspruch 1 oder 2, dadurch gekennzeichnet, daß auf der dem Inneren des Getriebegehäuses (2) zugekehrten Wand des Wärmetauschers wenigstens ein in das Inneren des Getriebegehäuses (2) ragendes Leitblech (9) vorgesehen ist.
